# EUROPÄISCHE PATENTSCHRIFT

(11) **EP 2 804 275 B1**
(45) Veröffentlichungstag und Bekanntmachung des Hinweises auf die Patenterteilung: **07.08.2019**
(21) Anmeldenummer: 14166103.3
(22) Anmeldetag: 25.04.2014
(51) Int. Cl.: H02G 3/06, H02G 15/04

(54) **Kabelverschraubung**
Cable gland
Dispositif de fixation de câble

(30) Priorität: 17.05.2013 DE 102013008405
(43) Veröffentlichungstag der Anmeldung: 19.11.2014
(73) Patentinhaber: Wieland Electric GmbH, 96052 Bamberg (DE)
(72) Erfinder: Dorscht, Markus, 96129 Strullendorf-Geisfeld (DE)
(74) Vertreter: Tergau & Walkenhorst Patentanwälte PartGmbB

(56) Entgegenhaltungen:
- EP-A1- 2 317 165
- FR-A1- 2 852 657
- GB-A- 2 013 420
- US-A- 4 141 117
- US-A- 5 464 300
- US-A1- 2002 121 390

## Beschreibung

Die Erfindung betrifft eine Kabelverschraubung. Derartige Kabelverschraubungen dienen beispielsweise zur Fixierung einer Leitung am Gehäuse eines Steckverbinders und dienen dabei zugleich als Zugentlastung für die Leitung. Weiterhin dienen Kabelverschraubungen zur Fixierung von Leitungen an Wanddurchführungen in ein elektrisches Gerät. Die Leitung ist dabei durch die Wanddurchführung hindurch von außen in den Innenraum des elektrischen Geräts eingeführt und die Kabelverschraubung fixiert die Leitung im Bereich der Wanddurchführung. Auch sind Kabelverschraubungen bei Anschlussteilen oder sonstigen Schnittstellen für elektrische Leitungen vorhanden.

Eine Kabelverschraubung ist beispielsweise aus der DE-OS 1765795 bekannt. Nachteilig ist dort die Tatsache, dass die Kabelverschraubung nur mit Hilfe von Werkzeugen montierbar und demontierbar ist. Eine weitere Kabelverschraubung ist aus der DE-OS 10105232 bekannt.

Aus der US 4,141,117 ist ferner eine Kabelverschraubung mit einem von einer Flügelmutter angetriebenen Sperrschlitten mit kugelförmigen Klemmelementen bekannt. Die kugelförmigen Klemmelemente sind an einem konisch zulaufenden Außengehäuse widergelagert und üben durch ein Einschrauben des Sperrschlittens in das Außengehäuse über die kugelförmigen Klemmelemente ihre Sperrwirkung aus. Diese bekannte Kabelverschraubung weist eine zylindrische Hülse mit einem Durchgangskanal für ein Leitungskabel auf. Ferner sind die vorerwähnten Klemmelemente an einer Einführöffnung des Durchgangskanals angeordnet. Über die Hülse ist eine wendelförmige Druckfeder geschoben. Die Druckfeder ist an der Hülse widergelagert.

Aus der US 2002/121390 A1 ist weiterhin eine Kabeldurchführung für eine Sonde bekannt. Eine erste Hülse dichtet hierbei ein das Kabel aufnehmendes Gehäuse nach außen hin ab. Eine zweite Hülse im Inneren des Gehäuses umgreift das Kabel eng und wird von einem Befestigungselement zur Fixierung gegen die erste Hülse gepresst. Aus der GB 2 013 420 A ist schließlich eine Wanddurchführung für ein Kabel bekannt. Diese Wanddurchführung weist einen Hohlzylinder mit einer Vielzahl von auf einer ringförmigen Linie angeordneten und voneinander unabhängigen Greifarmen auf. Eine Spannhülse ist über den Außenumfang eines Endes des Hohlzylinders schraubbar. Ein elastischer Federring drückt gegen die Innenflächen der Greifarme, während die Spannhülse die Greifarme nach innen drückt. Ferner sind in der Spannhülse Kerben und/oder Vorsprünge in entgegengesetzter Richtung zu einer am Hohlzylinder vorgesehenen Spannschraube orientiert, wodurch die Stirnenden der Greifarme und ein kegelförmiger Bereich der Spannhülse gegeneinander verspannt sind.

Ausgehend hiervon liegt der Erfindung die Aufgabe zugrunde, eine Kabelverschraubung so zu gestalten, dass sie einerseits werkzeuglos montierbar und demontierbar ist und andererseits im montierten Zustand einen sicheren Sitz der Vorrichtung gewährleistet.

Zur Lösung der Aufgabe ist eine Kabelverschraubung vorgeschlagen mit einer zylindrischen Hülse, durch welche die Leitung hindurchgeführt ist. Die zylindrische Hülse weist ein Klemmelement zur Fixierung der Leitung auf. Zur Betätigung des Klemmelements ist eine Überwurfmutter vorgesehen, welche auf die Hülse aufschraubbar ist. Das Außengewinde der Hülse ist gemäß der Erfindung durch eine wendelförmige Druckfeder gebildet. Die Überwurfmutter weist zum Aufschrauben auf die Druckfeder dementsprechend einen Gewindegang auf. Wird die Überwurfmutter mit Hilfe des Gewindegangs auf die an der Hülse gelagerte Druckfeder aufgeschraubt, bewegt sich die Überwurfmutter entlang der Hülse. In axialer Richtung neben dem Gewindegang in der Innenkontur der Überwurfmutter ist eine Federkammer in die Innenkontur der Überwurfmutter eingebracht, welche den überschraubten Bereich der Druckfeder aufnimmt.

Ist die Überwurfmutter vollständig auf der Hülse aufgeschraubt, verlässt die Druckfeder den Gewindegang und liegt vollständig in der Federkammer ein. Beim Verlassen des Gewindegangs erzeugt die letzte Wendel der Druckfeder ein klickendes Geräusch, so dass dem Bediener auch durch ein akustisches Signal angezeigt wird, dass die Überwurfmutter ihre Montageendstellung erreicht hat. Da der Gewindegang in der Innenkontur der Überwurfmutter dann in kein Außengewinde mehr eingreift, ist ein zu festes Anziehen der Überwurfmutter ebenfalls wirksam verhindert. Die Druckfeder ist im Montageendzustand vollständig komprimiert. Aufgrund dieser vollständigen Kompression stellt sich die Verschraubung auch selbst nach, wenn sich beispielsweise der Mantel der Leitung oder Dichtungsteile bei geschlossener Kabelverschraubung nachträglich setzen. In Folge des Durchdrehens der Hülse bei vollständig in der Federkammer einliegender Druckfeder ist auch eine Beschädigung der Leitung durch die Einleitung zu hoher Verschraubungskräfte oder -momente wirksam verhindert. Die werkzeuglose Demontage der Überwurfmutter ist problemlos möglich. Zum Lösen der Überwurfmutter wird diese einfach gegen die Einschraubrichtung geschraubt, so dass das Freiende der Druckfeder wieder in den Gewindegang einspurt und die Überwurfmutter über die Druckfeder von der Hülse weggeschraubt werden kann.

In vorteilhafter Ausgestaltung ist das Klemmelement als Klemmring mit mehreren parallel laufenden Klemmfingern oder Klemmzungen ausgestaltet. Diese Klemmfinger oder Klemmzungen können in Richtung auf den Außenmantel der Leitung verschwenkt werden. Die Schwenkbewegung bewerkstelligt dabei ein am Ende der Überwurfmutter innen eingeformter Innenkonus. Zur Verbesserung der Fixierung der Leitung können die Freienden der Klemmfinger oder Klemmzungen an den Außenquerschnitt der Leitung angepasste Anlageflächen oder besondere Profilierungen, beispielsweise Klemmbacken aufweisen. In diesem Zusammenhang ist es vorteilhaft, einen möglichst großflächigen Anlagebereich der Klemmfinger oder Klemmzunge mit dem Außenmantel der Leitung zu schaffen, um die erforderliche Klemmkraft auf die Leitung zu übertragen. Die Gesamtklemmkraft der Kabelverschraubung resultiert aus der Vorspannkraft der Druckfeder nach der Montage und der durch die Überwurfmutter dadurch erzeugten zusätzlichen Vorspannkraft durch das komplette Einliegen der Druckfeder in der Federkammer 17.

Zur Vereinfachung der Montage der Überwurfmutter ist in vorteilhafter Ausgestaltung dem Gewindegang ein Gewindeanlauf vorgeschaltet. Mit dem Gewindeanlauf trifft die Überwurfmutter beim Einschrauben gleich auf den am Außenmantel der Hülse festgelegten Bereich der wendelförmigen Druckfeder und spurt so sicher die wendelförmige Druckfeder in den Gewindegang ein.

Die Druckfeder ist in vorteilhafter Ausgestaltung zwischen jeweils einem auf der Mantelfläche der Hülse angeordneten Anschlag und einem mit axialem Abstand zu diesem Anschlag wiederum auf der Mantelfläche der Hülse angeordneten Gegenanschlag gelagert. Der axiale Abstand zwischen dem Anschlag und dem Gegenanschlag kann in vorteilhafter Ausgestaltung so dimensioniert sein, dass die Druckfeder im auf dem Hülsenmantel montierten Zustand bereits vorgespannt ist.

In weiterer vorteilhafter Ausgestaltung ist ein in axialer Richtung neben dem Klemmelement angeordneter schraubenförmiger Wulst als Anschlag vorgesehen. Dies hat den montagetechnischen Vorteil, dass die Druckfeder einfach über diesen schraubenförmigen Wulst übergeschraubt werden kann, bis sie mit ihrer Federspitze am Gegenanschlag und ihrem Federende am Anschlag anliegt. Der schraubenförmige Wulst kann in weiterer Ausgestaltung auch aus beabstandeten Einzelsegmenten oder ähnlichen Formelementen bestehen. Der Gegenanschlag, an welchem die Druckfeder mit ihrer Federspitze im Montageendzustand anstößt, ist vorzugsweise flanschartig ausgestaltet, wobei eine Gehäusewand, insbesondere eine Steckverbindergehäusewand, als Gegenanschlag dienen kann.

Zur Verbesserung des Klemmsitzes des Klemmrings bzw. der Klemmfinger bzw. Klemmzungen des Klemmrings ist in vorteilhafter Ausgestaltung eine kompressible Dichtung zwischen dem Klemmring und der Leitung eingebracht.

Anhand der nachstehend dargestellten Ausführungsbeispiele ist die Erfindung mit weiteren Einzelheiten erläutert. Die Zeichnungsfiguren zeigen jeweils oben eine Seitenansicht und unten einen Schnitt durch die darüber dargestellte Seitenansicht der Kabelverschraubung in ihrer jeweiligen Funktionsstellung. Hierbei zeigen:
- Fig. 1: die Hülse einer Kabelverschraubung mit einem Anschlussgewinde oder einer sonstigen Schnittstelle, wie sie beispielsweise als Wanddurchführung verwendet wird,
- Fig. 2: eine Kabelverschraubung mit einer als Grundteil für ein Steckverbindergehäuse dienenden Hülse in Explosionsdarstellung,
- Fig. 3: die in Fig. 2 dargestellte Kabelverschraubung mit eingeführter Leitung und mit am Gewindeanlauf anliegender Überwurfmutter,
- Fig. 4: die Kabelverschraubung aus Fig. 3 mit teilweise aufgeschraubter Überwurfmutter sowie
- Fig. 5: die Kabelverschraubung aus Fig. 3 und Fig. 4 mit vollständig aufgeschraubter Überwurfmutter.

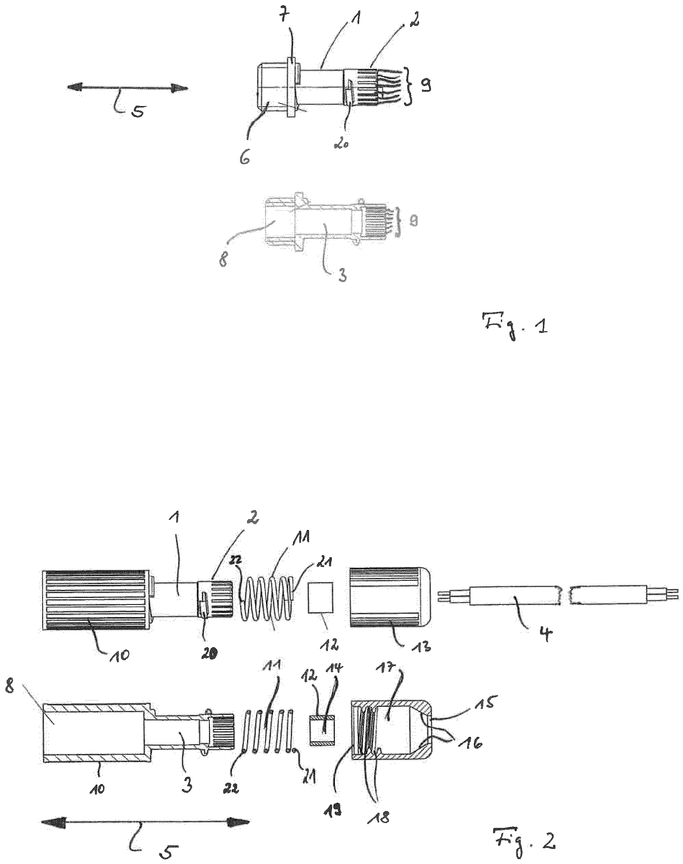

Die Kabelverschraubung weist zunächst die in Fig. 1 dargestellte Hülse 1 sowie den endseitigen Klemmring 2 auf. Die Hülse 1 ist von einem Hohlzylinder gebildet und weist einen Durchgangskanal 3 für eine einzubringende Leitung 4 auf. Die Leitung 4 ist in Fig. 2 erstmals angedeutet.

Bei der in Fig. 1 dargestellten Ausführungsform schließt sich in Längsrichtung 5 an den eigentlichen Körper der Hülse 1 ein Montageflansch 6 an. Mit Hilfe dieses Montageflansches 6 kann die Hülse 1 beispielsweise an der Wand eines Gerätegehäuses adaptiert sein. Die Hülse 1 stützt sich dann mit der Flanschscheibe 7 gegen die Gehäusewand des elektrischen Geräts. Im Bereich des Montageflansches 6 ist eine mit dem Durchgangskanal 3 fluchtende Aufnahmekammer 8 angebracht. In der Aufnahmekammer 8 können beispielsweise elektrische Kontaktelemente angeordnet sein, welche im Montageendzustand mit der Leitung 4 verbunden sind.

Der Klemmring 2 besteht aus einer Vielzahl von axial in Längsrichtung 5 von der Hülse 1 abragenden, auf einer Kreislinie angeordneten Klemmfingern 9.

Fig. 2 zeigt eine prinzipiell mit der Darstellung in Fig. 1 baugleiche Hülse 1. Dort schließt sich an das dem Klemmring 3 abgewandte Ende der Hülse 1 ein Steckverbindergehäuse 10 an. In der Aufnahmekammer 8 dieses Steckverbindergehäuses 10 können in der Zeichnung nicht dargestellte Stecker- und/oder Buchsenkontakte angeordnet werden.

Die erfindungsmäßige Kabelverschraubung wird durch eine wendelförmige Druckfeder 11, eine Radialdichtung 12 und eine Überwurfmutter 13 ergänzt. Die Radialdichtung 12 weist einen dem Durchgangskanal 3 entsprechenden Dichtungsdurchgang 14 auf.

Die Überwurfmutter 13 ist innen ausgehölt und weist endseitig eine Leitungseinführung 15 auf. In Längsrichtung 5 an die Leitungseinführung 15 schließt sich ein Innenkonus 16 an. Der Innenkonus 16 mündet in eine Federkammer 17. An die Federkammer 17 schließt sich ein Gewindegang 18 sowie ein Gewindeanlauf 19 an.

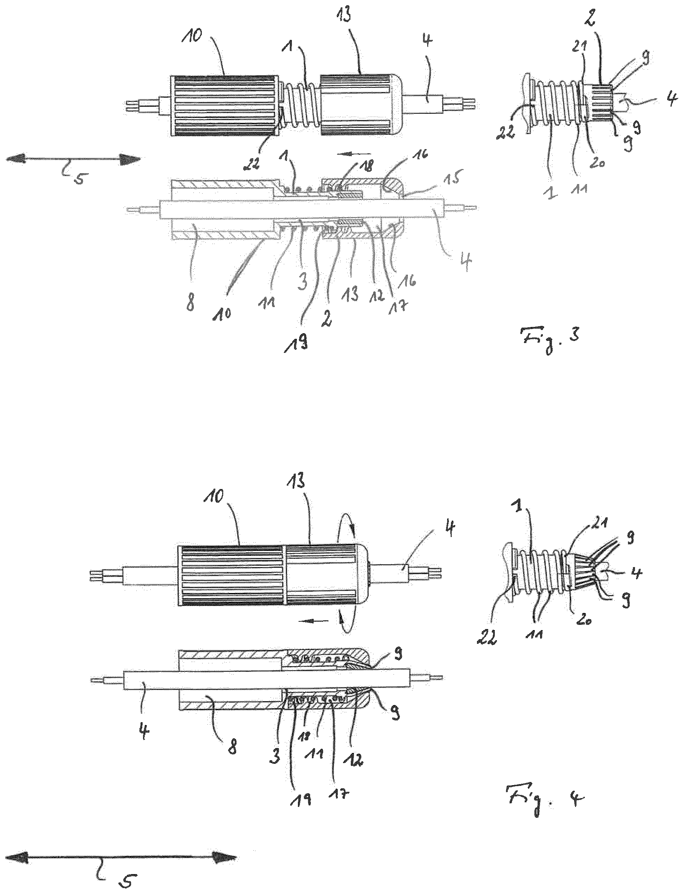

Anhand der Darstellungen der Fig. 3, Fig. 4 und Fig. 5 ist die Montage der Leitung 4 mit weiteren Einzelheiten erläutert. Die Leitung 4 wird durch die Leitungseinführung 15 durch die Überwurfmutter 13 hindurchgesteckt und durch den Durchgangskanal 3 der Hülse 1 und die Aufnahmekammer 8 des Steckverbindergehäuses 10 hindurchgeschoben. Hierbei liegt die Radialdichtung 12 in ihrem Dichtungssitz im Klemmring 2 ein. Die Druckfeder 11 ist über den Außenmantel der Hülse 1 geschoben.

Zum Aufschrauben der Überwurfmutter 13 greift - wie in Fig. 3 dargestellt - die Überwurfmutter 13 zunächst mit dem Gewindeanlauf 19 an der Druckfeder 11 an. Sobald der Gewindeanlauf 19 die Druckfeder 11 greift, wird die Überwurfmutter 13 in Längsrichtung 5 auf die Druckfeder 11 aufgeschraubt, wobei die Federgänge der Druckfeder 11 zunächst vom Gewindeanlauf 19 erfasst werden. Anschließend wird der Gewindegang 18 über den entsprechenden Gang der Druckfeder 11 geschraubt und der überschraubte Bereich der Druckfeder 11 gerät nach und nach in die Federkammer 17. In der Federkammer 17 wird die Druckfeder 11 kontinuierlich zusammengedrückt. Zugleich drückt der Innenkonus 16 auf die Klemmfinger 9 des Klemmrings 2 und bringt die Klemmfinger 9 mit ihren Enden in ihre Anlagestellung am Außenmantel der Leitung 4. Die Radialdichtung 12 wird dabei von den Klemmfingern 9 komprimiert.

In den Zeichnungsfiguren ist weiterhin der aus mehreren Segmenten zusammengesetzte, als Anschlag 20 wirksame schraubenförmige Wulst erkennbar. Die Druckfeder 11 wird bei der Montage mit ihrer Federspitze 22 voraus über den schraubenförmigen Anschlag 20 so lange übergeschraubt, bis die Federspitze 22 an dem der Hülse 1 zugewandten Ende der Flanschscheibe 7 bzw. der der Hülse 1 zugewandten Gehäusewand des Steckverbindergehäuses 10 anliegt. Diese Anlagestellung ist in Fig. 3 gezeigt. Das in Längsrichtung 5 der Federspitze 22 abgewandte Federende 21 liegt bei vollständig montierter Druckfeder 11 an der dem Flansch 7 bzw. dem Steckverbindergehäuse 10 zugewandten Wandung des Anschlags 20 an. Insbesondere aus der Darstellung der Fig. 2 ist gut erkennbar, dass die Druckfeder 11 in der in den Figuren gezeigten bevorzugten Ausführungsform im Bereich der Federspitze 22 eine deutlich geringere Steigung der Federwendeln aufweist als im Bereich des Federendes 21. Diese ansteigende Steigung der Federwendel verhindert eine unbeabsichtigte Demontage der Druckfeder 11 von der Hülse 1. Die Druckfeder 11 weist im entspannten Zustand eine deutlich größere Eigenlänge in Längsrichtung 5 auf als im auf der Hülse 1 adaptierten Zustand. In Folge der Stauchung der Druckfeder 11 im adaptierten Zustand zwischen dem Anschlag 20 und der als Gegenanschlag wirksamen Flanschscheibe 7 bzw. Gehäusewand des Steckverbindergehäuses 10 ist bereits eine Vorspannung in die Druckfeder 11 eingebracht. Dies bewirkt eine gewisse und gewollte Lagesicherung der Druckfeder 11 auf der Hülse 1, wodurch das Aufschrauben der Überwurfmutter 13 begünstigt wird. Beim Aufschrauben der Überwurfmutter 13 verdreht sich nämlich die als Innengewinde wirksame Druckfeder 11 nicht. Ferner wird durch die bereits im vormontierten Zustand eingebrachte Vorspannkraft ein gewisser Anteil der gesamten Klemmkraft der Kabelverschraubung in das System eingebracht

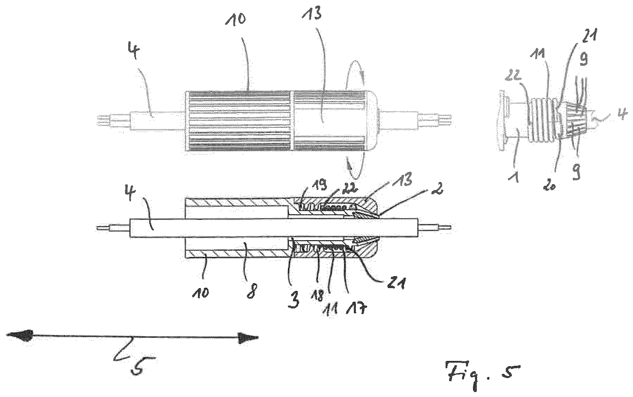

Bei vollständig aufgeschraubter Überwurfmutter 13 (siehe Darstellung in Fig. 5) liegt die Druckfeder 11 vollständig in der Federkammer 17 ein. Dies bedeutet zugleich, dass keine Federgänge der Druckfeder 11 mehr im Gewindegang 18 oder im Gewindeanlauf 19 einliegen. Die Druckfeder 11 liegt vollständig in der Federkammer 17 und ist maximal vorgespannt (Fig. 5). Auf diese Weise übt die Druckfeder 11 in Längsrichtung 5 ihre Druckspannung auf die Überwurfmutter 13 und damit auf den Klemmring 2 mit seinen Klemmfingern 9 aus. Hervorzuheben ist die Tatsache, dass durch die dauernde mittelbare Einwirkung der Druckfeder 11 auf den Innenkonus 16 und damit auf den Klemmring 12 sich die Kabelverschraubung selbsttätig nachstellt, so dass stets gewährleistet ist, dass die erforderlichen Haltekräfte auf die Leitung 4 einwirken. Außerdem ermöglicht es die erfindungsmäßige Kabelverschraubung Leitung 4 mit unterschiedlichen Leitungsdurchmessern bzw. Leitungsquerschnitten zu fixieren. Sind kleinere Durchmesser oder Querschnitte vorhanden, wirken geringere Klemmkräfte. Mit steigenden Durchmessern der Leitung 4 steigen auch die auf die Leitung 4 einwirkenden Klemmkräfte.

Die Montage und Demontage der Überwurfmutter 13 ist ohne zur Hilfenahme von Werkzeugen problemlos möglich. Ausgehend von der in Fig. 3 dargestellten Position wird die Überwurfmutter 13 bei der Montage mit Hilfe zunächst des Gewindeanlaufs 19 und anschließend des Gewindegangs 18 über die Druckfeder 11 geschraubt bis die Überwurfmutter 13 am Steckverbindergehäuse 10 bzw. bei der Ausführungsform der Hülse gemäß Fig. 1 an der Flanschscheibe 7 des Montageflansches 6 anliegt (Fig. 4). Anschließend wird die Überwurfmutter 13 so lange weiter bewegt, bis der letzte Wendelgang der Druckfeder 11 aus dem Gewindegang 18 heraus in die Federkammer 17 hineingleitet. Da die Druckfeder 11 dann vollständig komprimiert ist, ist ein deutliches Klickgeräusch zu hören. Außerdem verringern sich die für das Einschrauben der Überwurfmutter 13 erforderlichen Schraubkräfte, so dass die Überwurfmutter 13 bei vollständig in der Federkammer 17 einliegender Druckfeder 11 "leer" dreht.

Zum Öffnen der Kabelverschraubung muss die Überwurfmutter 13 lediglich in Längsrichtung 5 vom Steckverbindergehäuse 10 bzw. vom Montageflansch 6 weggeschraubt werden. Die Druckfeder 11 spurt sodann in Folge des Federdrucks wieder in den Gewindegang 18 und anschließend in den Gewindeanlauf 19 ein, so dass die Überwurfmutter 13 aus ihrer in Fig. 5 dargestellten Schließstellung in ihre in Fig. 3 dargestellte Öffnungsstellung wieder zurückgeschraubt werden und anschließend abgezogen werden kann, was in Fig. 2 dargestellt ist.

Hervorzuheben ist die platzsparende Bauweise und die Tatsache der ausschließlich in Längsrichtung 5 wirkenden Kräfte. Außerdem erfolgen sämtliche Bewegungen in Längsrichtung 5, was die Montage auch unter beengten Platzverhältnissen begünstigt.

### Bezugszeichenliste

- 1: Hülse
- 2: Klemmring
- 3: Durchgangskanal
- 4: Leitung
- 5: Längsrichtung
- 6: Montageflansch
- 7: Flanschscheibe
- 8: Aufnahmekammer
- 9: Klemmfinger
- 10: Steckverbindergehäuse
- 11: Druckfeder
- 12: Radialrichtung
- 13: Überwurfmutter
- 14: Dichtungsdurchgang
- 15: Leitungseinführung
- 16: Innenkonus
- 17: Federkammer
- 18: Gewindegang
- 19: Gewindeanlauf
- 20: Anschlag
- 21: Federende
- 22: Federspitze

## Patentansprüche

1. Kabelverschraubung bestehend
- aus einer zylindrischen Hülse (1) mit einem Durchgangskanal (3) für eine Leitung (4)
-- mit einem Klemmelement an der Einführöffnung des Durchgangskanals (3) und
-- mit einer über den Außenmantel der Hülse (1) geschobenen, an der Hülse (1) widergelagerten wendelförmigen Druckfeder (11),
**dadurch gekennzeichnet,**
**dass** durch die wendelförmige Druckfeder das Außengewinde der Hülse gebildet ist und
**dass** eine über die Hülse (1) schraubbare Überwurfmutter (13) eine Innenkontur aufweist
-- mit mindestens einem Gewindegang (18) zum Aufschrauben auf die Druckfeder, mit welchem die Überwurfmutter (13) über die Druckfeder (11) schraubbar ist,
-- mit einer sich in axialer Richtung an den Gewindegang (18) anschließenden Federkammer (17) für die Aufnahme des überschraubten Bereichs der Druckfeder (11) und
-- mit einer sich in axialer Richtung an die Federkammer (17) anschließenden Innenkontur als Betätiger für das Klemmelement.

2. Kabelverschraubung nach Anspruch 1
**gekennzeichnet durch**
einen aus mehreren schwenkbaren Klemmfingern (9) gebildeten Klemmring (2) als Klemmelement und einen Innenkonus (16) am Ende der Überwurfmutter (13) als Betätiger für den Klemmring (2)

3. Kabelverschraubung nach Anspruch 1 oder 2
**gekennzeichnet durch**
einen Gewindeanlauf (19) an der Vorderseite der Überwurfmutter (13) und einen sich an den Gewindeanlauf (19) anschließenden Gewindegang (18).

4. Kabelverschraubung nach einem der Ansprüche 1 bis 3
**gekennzeichnet durch**,
einen in axialer Richtung neben dem Klemmelement angeordneten Anschlag (20) und einen mit axialem Abstand zum Anschlag (20) angeordneten Gegenanschlag für die Druckfeder (11).

5. Kabelverschraubung nach Anspruch 4
**gekennzeichnet durch**
einen schraubförmigen Wulst als Anschlag (20) und einen Flansch als Gegenanschlag.

6. Kabelverschraubung nach Anspruch 5
**dadurch gekennzeichnet**
**dass** die Gehäuserückwand eines Steckverbindergehäuses (10) den als Gegenanschlag wirksamen Flansch bildet

## Claims

1. Cable gland consisting
of a cylindrical sleeve (1) having a through channel (3) for a wire (4),
- comprising a clamping element at the insertion opening of the through channel (3) and
- comprising a spiral compression spring (11) pushed over the outer covering of the sleeve (1) and supported on the sleeve (1),
**characterized in that**
the outer thread of the sleeve is formed by the spiral compression spring, and
**in that** a union nut (13) which can be screwed over the sleeve (1) has an internal contour
- comprising at least one thread turn (18) for screwing onto the compression spring, by means of which thread turn the union nut (13) can be screwed over the compression spring (11),
- comprising a spring chamber (17) that connects to the thread turn (18) in the axial direction for receiving the region of the compression spring (11) that has been screwed over and
- comprising an internal contour that connects to the spring chamber (17) in the axial direction as an actuator for the clamping element.

2. Cable gland according to claim 1
**characterized by**
a clamping ring (2) that is made up of a plurality of pivotable clamping fingers (9) as a clamping element, and an internal taper (16) on the end of the union nut (13) as an actuator for the clamping ring (2).

3. Cable gland according to either claim 1 or claim 2,
**characterized by**
a thread start (19) on the front face of the union nut (13) and a thread turn (18) that connects to the thread start (19).

4. Cable gland according to any of claims 1 to 3,
**characterized by**
a stop (20) arranged adjacent to the clamping element in the axial direction and a counter stop for the compression spring (11), which counter stop is axially spaced from the stop (20).

5. Cable gland according to claim 4,
**characterized by**
a helical bead as a stop (20) and a flange as a counter stop.

6. Cable gland according to claim 5,
**characterized in that**
the housing rear wall of a connector housing (10) forms the flange which acts as the counter stop.

## Revendications

1. Dispositif de fixation de câble comprenant
un manchon cylindrique (1) comportant un canal de passage (3) pour un conduit (4)
- un élément de serrage prévu au niveau de l'ouverture d'insertion du canal de passage (3) et
- un ressort de compression hélicoïdal (11) qui est enfilé sur l'enveloppe extérieure du manchon (1) et est abouté au manchon (1),
**caractérisé en ce**
**que** le filetage extérieur du manchon est formé par le ressort de compression hélicoïdal et en ce qu'un écrou d'accouplement (13) pouvant être vissé sur le manchon (1) présente un contour intérieur comportant
- au moins un pas de filetage (18) destiné à être vissé sur le ressort de compression, au moyen duquel l'écrou d'accouplement (13) peut être vissé par le ressort de compression (11),
- une chambre de ressort (17) adjacente au pas de filetage (18) dans la direction axiale pour recevoir la zone vissée du ressort de compression (11), et
- un contour intérieur adjacent à la chambre de ressort (17) dans la direction axiale comme actionneur de l'élément de serrage.

2. Dispositif de fixation de câble selon la revendication 1
**caractérisé par**
un anneau de serrage (2) formé d'une pluralité de doigts de serrage pivotants (9) comme élément de serrage, et par un cône intérieur (16) à l'extrémité de l'écrou d'accouplement (13) comme actionneur de l'anneau de serrage (2)

3. Dispositif de fixation de câble selon la revendication 1 ou 2
**caractérisé par**
un pas de filetage incomplet (19) sur le côté avant de l'écrou d'accouplement (13) et un pas de filetage (18) adjacent au pas de filetage incomplet (19).

4. Dispositif de fixation de câble selon l'une des revendications 1 à 3
**caractérisé par**,
une butée (20) disposée dans la direction axiale à côté de l'élément de serrage, et par une contre-butée du ressort de compression (11) disposée à une distance axiale de la butée (20).

5. Dispositif de fixation de câble selon la revendication 4
**caractérisé par**
un bourrelet en forme de vis comme butée (20), et par une bride comme contre-butée.

6. Dispositif de fixation de câble selon la revendication 5
caractérisé en ce
en ce que la paroi arrière de boîtier d'un boîtier de connecteur (10) forme la bride qui sert de contre-butée.
